# EUROPEAN PATENT APPLICATION

(11) **EP 4 782 103 A1**
(43) Date of publication of application: **29.07.2026**
(21) Application number: 26153149.5
(22) Date of filing: 21.01.2026
(51) Int. Cl.: B01L 9/06, G01N 27/447, B01L 3/00

(54) **SAMPLE TRAY FOR TEMPERATURE-SENTITIVE REACTIONS**

(30) Priority: 27.01.2025 US 202563750119 P; 08.09.2025 US 202519322439
(71) Applicant: Bioptic, Inc., New Taipei City 23141 (TW)
(72) Inventor: Tsai, Shou-Kuan, 23141 New Taipei City (TW)
(74) Representative: Karakatsanis, Georgios

(57) **Abstract**

A sample tray for temperature-sensitive reactions includes sample wells, floating ribs, and a frame. Each sample well corresponds to two floating ribs. The sample wells are disconnected one another in a length direction of the frame, and each sample well is connected to the rectangular frame in a width direction of the rectangular frame through two floating ribs on both sides of the sample well.

## Description

### CROSS-REFERENCE TO RELATED APPLICATIONS

This application claims the benefit under 35 U.S.C. 119(e) of U.S. Provisional Patent Application No. 63/750,119 filed on January 27, 2025. This application and all published documents discussed below are fully and expressly incorporated by reference herein.

### BACKGROUND OF THE INVENTION

### 1. Field of the Invention

The present invention relates to a bio-analysis device, and more particularly with a sample tray for temperature-sensitive reactions, which may include but are not limited to, polymerase chain reactions (PCR), restriction enzyme digestions, or rapid diagnostics.

### 2. Description of Related Art

Capillary electrophoresis (CE) separation is a micro fluidic approach to gel-electrophoresis (micro-channel device to simplify gel-electrophoresis separation), whose greatest advantage is its diverse range of applications. CE technology is commonly accepted by the biotechnology industry specifically in the nucleic acid-based testing as a reliable, high resolution and highly sensitive separation and detection tool, and CE has been applied for, e.g., protein, carbohydrate and DNA-related analyses such as oligonucleotides analysis, DNA sequencing, and dsDNA fragments analysis, and glycan profiling.

U.S. Patent No. 8,778,155, commonly assigned to the assignee of the present invention, discloses a reusable cartridge-based portable electrophoresis system configured to utilize a pen shaped bio-separation cartridge that is easy to assemble and use with no moving parts and that has an integrated reagent (separation buffer) reservoir. The cartridge includes a body, defining an opening as a detection window for receiving external detection optics, at least one capillary column supported in the body, having a first end extending beyond a first end of the body, wherein the detection window exposes a section along the capillary column, to which the external optics are aligned through the detection window, and a reservoir attached to a second end of the body in fluid flow communication with a second end of the capillary column. The reservoir is structured to be coupled to an air pressure pump or N₂ tank that pressurizes the gel reservoir to purge and fill the capillaries with buffer/gel as the separation support medium. A negatively charged sample can be loaded into the capillary column to perform CE separation for analyses. At the conclusion of the sample separation run, the spent sample (negatively charged separated DNA/RNA fragments) are trapped in the gel-reservoir (large pool) within the embedded electrode (Anode) away from the output of the capillary column. Another sample may be subsequently loaded into the capillary column and analyzed in another run using the same cartridge.

In connection with DNA/RNA analyses based on CE separations, polymerase chain reaction (abbreviated PCR) is a laboratory technique for rapidly producing (amplifying) millions to billions of copies of a specific segment of DNA, which can then be studied in greater detail at high resolution without requiring a large sample volume of DNA/RNA to be initially provided. PCR involves using short synthetic DNA/RNA fragments called primers to select a segment of the genome to be amplified, and then multiple rounds of DNA/RNA synthesis to amplify that segment prior to traditional gel-electrophoresis or capillary electrophoresis (CE) separation and detection analysis, thus providing high resolution results based on an initial low sample volume intake (e g., in picoliters). The PCR process requires thermal cycling of the sample DNA segment to prepare the sample for subsequent CE separation analysis.

Heretofore, it has been a longstanding practice to adopt a separate PCR process undertaken with a thermocycler that is not part of (i.e., outside) the CE separation and detection system/instrument, and the prepared sample is then transferred to the CE system for separation analysis. US Patent No. 11,531,004, commonly assigned to the assignee of the present invention, discloses a CE instrument that includes a temperature control mechanism, such as a Peltier heating/cooling module interfaced with (e.g., below) the a table that supports sample vials to be positioned below a capillary cartridge. The heating/cooling module provides temperature control to facilitate PCR amplification and electrophoresis/detection in one instrument.

US20230330680A1 discloses a portable electrophoresis system with integrated thermocycler, which includes a thermal control module comprising: a thermal platform thermally coupled to the thermoelectric module, wherein the thermal platform comprises: a base, and at least a thermal block thermal conductively supported on the base, wherein the thermal block is structured to receive a receptacle containing at least a sample, and wherein the thermal block comprises a body comprising a split longitudinal block having two longitudinal sides defining a valley, wherein the facing walls of the sides each has a scalloped concave profile conforming to convex conical tube shaped profile of bottom surfaces of the wells of the receptacle tray; a heat sink; and a thermoelectric module thermal conductively coupled between the base of the thermal platform and the heat sink, heating/cooling the thermal platform in accordance with desired heating/cooling temperature profile.

TW201623938A discloses a temperature control module for PCR including a temperature adjustment member and a heater. The temperature adjustment member is formed from a mixture that includes a resin and a substance having a higher thermal conductivity than said resin. The heater controls the temperature of the temperature adjustment member. The temperature adjustment member is formed such that an octuple tube is inserted therein. The temperature adjustment member is in contact with the bottom of the inserted octuple tube.

CN118580940A discloses a nucleic acid amplification reaction container and a nucleic acid amplification reaction device. The nucleic acid amplification reaction container comprises a support and at least one transparent or semitransparent hose, sample inlets are formed in the top of the support, and the number of the sample inlets is matched with that of the hoses; the lower ends of the sample inlets are connected and communicated with the top of the hose, the hose is used for injecting nucleic acid amplification reaction liquid, a sealing opening is formed in the bottom of the hose, and the support further comprises sealing covers which are matched with the sample inlets in number and used for blocking the sample inlets.

The accuracy and uniformity of temperature control are important for PCR amplification. Imprecise temperature may cause problems or failures in PCR amplification, such as low amplification efficiency, no band or faint band, nonspecific bands or primer-dimers, smeared bands, etc., which may make subsequent analysis impossible and even require resampling.

### SUMMARY OF THE INVENTION

This summary is provided to introduce a selection of concepts in a simplified form that are further described below in the detailed description. This summary, and the foregoing background, is not intended to identify key aspects or essential aspects of the claimed subject matter. Moreover, this summary is not intended for use as an aid in determining the scope of the claimed subject matter.

In one aspect, a sample tray for temperature-sensitive reactions includes a plurality of sample wells, a plurality of sample wells, a frame, and a plurality of floating ribs. Each sample well corresponds to two floating ribs. The plurality of sample wells are disconnected one another in a length direction of the frame, and each sample well is connected to the frame in a width direction of the frame through the corresponding two floating ribs on both sides of the sample well.

The inventive sample tray features a novel free floating rib design that allows each well to move freely in all directions, e.g., in vertical, length, and width directions. This design enables each sample well to fit perfectly with the corresponding thermal post, maximizing the surface for efficient heat transfer.

The sample tray is specifically engineered to minimize a cumulative tolerance between the thermal posts and the sample wells (tubes). The cumulative tolerance creates a gap between them and thus potentially affects the PCR efficiency. It is not only reducing the final PCR concentration but also, in some cases, influencing the test results, particularly in multiplex PCR.

In one embodiment, each floating rib is step-shaped and includes a first rib section and a second rib section connected to each other, wherein a thickness of the first rib section is greater than a thickness of the second rib section.

In one embodiment, the first rib section tapers to the frame along the width direction.

In one embodiment, the second rib section tapers to the frame along the width direction.

In one embodiment, the two floating ribs allow a displacement of each sample well in a vertical direction as well as in the length direction and in the width direction.

In one embodiment, a wall thickness of each sample well is between 0.15 mm and 0.25 mm.

In one embodiment, a heating or cooling rate of the plurality of sample wells is equal to or greater than 5°C/sec.

In one embodiment, the sample tray further includes a supporting base connected to the frame and supporting the frame.

In one embodiment, the sample tray is integrally formed.

In one embodiment, the sample tray is rectangular-shaped.

In one embodiment, the sample tray is ring-shaped, in which the length direction is a circumference direction of the sample tray, and the width direction is a radial direction of the sample tray.

### BRIEF DESCRIPTION OF THE DRAWINGS

Non-limiting and non-exhaustive embodiments of the disclosed technology, including the preferred embodiment, are described with reference to the following figures, wherein like reference numerals refer to like parts throughout the various views unless otherwise specified.
FIG. 1 is a schematic view of a capillary electrophoresis (CE) system incorporating an inventive thermal cycling module/thermal cycler in accordance with one embodiment of the present invention.
FIG. 2A is a perspective view showing a capillary electrophoresis system with an integrated thermal cycling module/thermal cycler in accordance with one embodiment of the present invention.
FIG. 2B is a cross-sectional view taken along line A-A of FIG. 2A.
FIGS. 2C and 2D are cross-sectional views showing that a lid of the thermal cycler is in contact of the sample tray in accordance with one embodiment of the present invention.
FIGS. 3A to 3E are respectively a perspective view, a top view, a front view, a left side view, and a bottom perspective view of the sample tray in accordance with one embodiment of the present invention.
FIGS. 4A to 4C are respectively a perspective view, a top view, and a right side view of a thermal cycling module/thermal cycler in accordance with an embodiment of the present invention.
FIG. 5A shows a heating/cooling curve of a well of conventional octuple tube (PCR tube).
FIG. 5B shows a heating/cooling curve of a sample well of an inventive sample tray.
FIG. 6A is a graph showing the relationship between the migration time and the relative fluorescence unit (RFU) of two wells of conventional octuple tube (PCR tube).
FIG. 6B is a graph showing the relationship between the migration time and the relative fluorescence unit (RFU) of two sample wells in the sample tray of the present invention.
FIG. 7 is a top view showing a sample tray in accordance with another embodiment of the present invention.

### DETAILED DESCRIPTION OF THE PREFERRED EMBODIMENT

Embodiments are described more fully below with reference to the accompanying Figures, which form a part hereof and show, by way of illustration, specific exemplary embodiments. These embodiments are disclosed in sufficient detail to enable those skilled in the art to practice the invention. However, embodiments may be implemented in many different forms and should not be construed as being limited to the embodiments set forth herein. The following detailed description is, therefore, not to be taken in a limiting sense.

References are made to the bioanalytical system including detection system disclosed in U.S. Patent Nos. 8,778,155, 8,784,626, and 11,531,004 and U.S. Patent Application Publication Nos. US20150338347A1 and US20230330680A1, the entire contents of which are incorporated by reference as if fully set forth herein. These patents and patent applications are commonly assigned to BiOptic, Inc., the applicant and assignee of the present invention. In particular, these patents disclosed a simplified, low cost, high efficiency, highly sensitive, high throughput bio-separation system (e.g., capillary electrophoresis (CE) system). The bio-separation system includes an instrument that is configured to work with single channel or multi-channel capillary cartridges, and that is provided with a detection configuration that includes optics for application of incident radiation at and detection of output radiation from a detection zone along the separation channel, for the detection of radiation emitted by sample analytes (e.g., radiation induced fluorescence emission), without requiring fine alignment of the optics to the separation column. The instrument is configured to conduct bio-separation in the separation channel(s) of the bio-separation cartridge in an automated manner. The CE system has a less complex optical detection mechanism to reduce costs, which complements simplicity in operation, rapid analysis with high efficiency, sensitivity and throughput. US20150338347A1 further discloses fluorescence detection at two colors. US20230330680A1 further discloses a thermal control module for a bio-separation system. The present invention adopts and modifies these systems to include improvements to the system (including an inventive thermal cycling module for PCR) in accordance with the disclosure hereinbelow.

For purpose of illustrating the principles of the present invention and not limitation, the present invention is described by reference to embodiments directed to capillary electrophoresis using a single capillary separation column. Further, the present invention will be described, without limitation, in connection with radiation induced fluorescence detection (e g., using a laser or LED source for excitation).

### System Overview

Miniaturization and automation of analytical instrumentation has many advantages over conventional labor-intensive techniques (i.e. manual Slab-gel Electrophoresis). These advantages include improved data precision and reproducibility, short analysis times, minimal sample consumption, improved automation and integration of complex workflows.

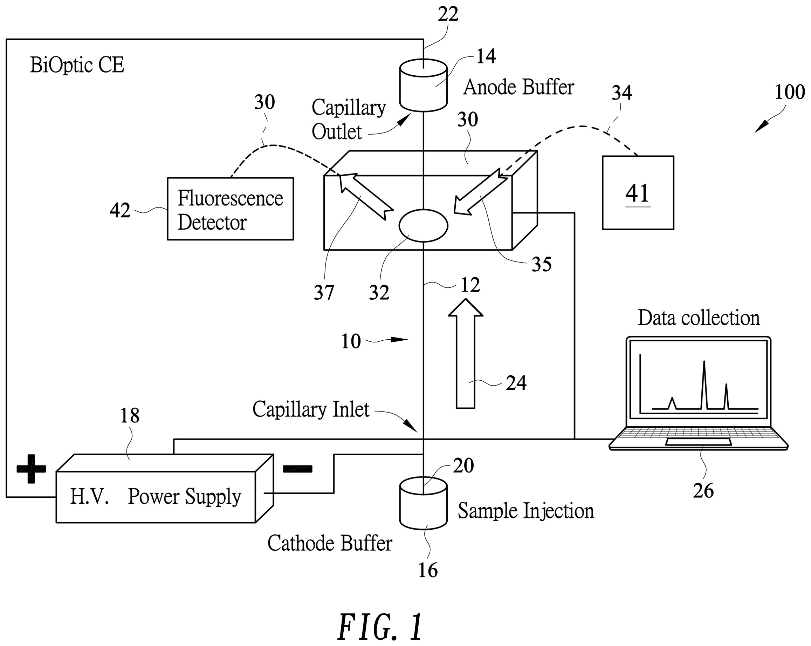

In one embodiment, a fully automated bio separation system, in particular a CE instrument incorporating a thermal cycling module/thermal cycler (referred to hereinbelow as a PCR-CE instrument or system) for sample preparation and PCR that provides fast amplification, and direct end point PCR check at high-speed separation and fluorescence detection for clinical applications. Fig. 1 illustrates a PCR-CE system/instrument 100 incorporating a thermal cycling module/thermal cycler, in accordance with one embodiment of the present invention. The PCR-CE system 100 incorporates the detection configuration as schematically illustrated in Fig. 1. The PCR-CE system 100 generally comprises a capillary separation column 10 (e.g., 200-500µm O.D.), which defines internal separation channels 12 (e.g., 25-200µm I.D.), which may be capillary columns 10 (only one separation channel/capillary column is illustrated for simplicity). The capillary column 10 may be made of fused silica, glass, polyimide, or other ceramic/glassy materials. The inside walls of the separation column 10 (i.e., the walls defining the separation channel 12) may be coated with a material that can build up an electrostatic charge to facilitate electrophoresis and/or electrokinetic migration of the sample components. The separation channel 12 may be filled with a separation support medium, which may be simply a running buffer, or a sieving gel matrix (of a linear or nonlinear polymeric composition) known in the art.

One end of the capillary column 10 is coupled to a reservoir 14 of running buffer. The other end of the capillary column 10 is coupled to another reservoir 16, which may alternately contain a sample (to be injected into the separation channel 12) and running buffer (after sample injection, to undertake separation). A power supply 18 supplies a high voltage to the reservoirs 14 and 16 via electrodes 20 and 22. The capillary column is supported in a cartridge C disclosed in U.S. Patent No. 8,778,155, which has been incorporate by reference herein, which is further discussed below.

The mechanism of electrophoresis and radiation induced fluorescence when considered alone are outside the scope of the present invention. For the sake of completeness, it is sufficient to briefly mention the operation of the PCR-CE system 100. In operation, a prepared biological sample, tagged with at least one known fluorophore, is introduced into the far end of the capillary column away from the detection zone, by any of a number of ways that is not part of the present invention (e.g., electrokinetic injection from a sample reservoir or physical pressure injection using a syringe pump). When a DC potential (e.g., 1-30 KV) is applied by the power supply 18 to the electrodes 20 and 22, the sample migrates under the applied electric potential along the separation channel 12 in the direction 24 (e.g., sample that is negatively charged travels toward the positive electrode 22 as shown in FIG. 1) and separates into bands of sample components. The extent of separation and distance moved along the separation channel 12 depends on a number of factors, such as migration mobility of the sample components, the mass and size or length of the sample components, and the separation support medium. The driving forces in the separation channel 12 for the separation of samples could be electrophoretic, pressure, or electro-osmotic flow (EOF) means.

When the sample reaches the detection zone 32, excitation radiation is directed via the excitation fiber 34 in a direction 35 at the detection zone 32. The sample components would fluoresce with intensities proportional to the concentrations of the respective sample components (proportional to the amount of fluorescent tag material). The detector 42 detects the intensities of the emitted fluorescence via the emission fiber 36 in a direction 37, at one or more wavelengths different from that of the incident radiation. The detected emitted radiation may be analyzed by a multi-color (e.g., two-color) detection scheme (further discussed in reference to US20150338347A1 incorporated by reference herein).

For an automated system, a controller 26 (e.g., in the form of an external notebook computer or a desktop computer, or a computing unit integrated on-board the instrument) having a processor, controls the operations of the various components in the PCR-CE system 100 to effect capillary electrophoresis separation and data collection, and controls of other functions discussed herein below. The controller 26 may provide user interface and programming of experiment/test settings and parameters. The controller includes the necessary application software routines, which may also include data reduction applications. The controller 26 may be an integral part of the instrument 100 (e.g., as part of the system board, with application routines coded in ASICs), or it may be a separate unit coupled/interfaced to the PCR-CE instrument 100. Fig. 1 illustrates an embodiment of the PCR-CE instrument 100 with a detached controller 26.

In the illustrated embodiment in Fig. 1, the controller is external to the housing of the PCR-CE instrument 100, in the form of a desktop computer or notebook computer, which is coupled to the PCR-CE instrument 100 via the system board, e.g., via a USB interface. The external controller 26 may include mass storage devices, display, keyboard, etc., or some of these user interface components may be configured integral to the PCR-CE instrument (e.g., a display and a keyboard on the front housing). Alternatively, the system board may be incorporated as part of the external controller 26, without departing from the scope and spirit of the present invention. The specific implementation of such control is well within the knowledge of one skilled in the art given the disclosure herein.

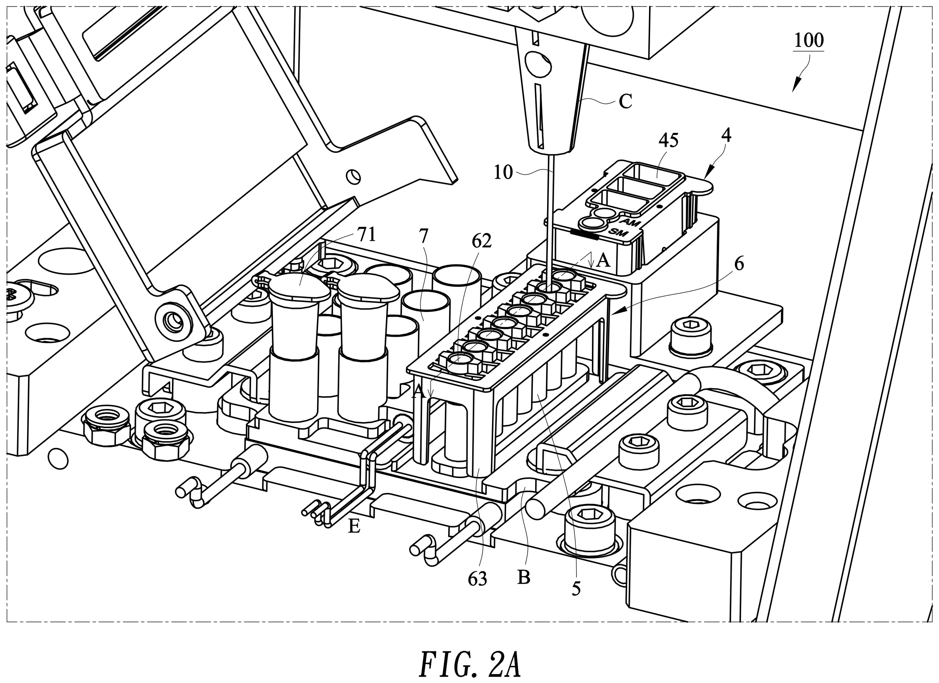

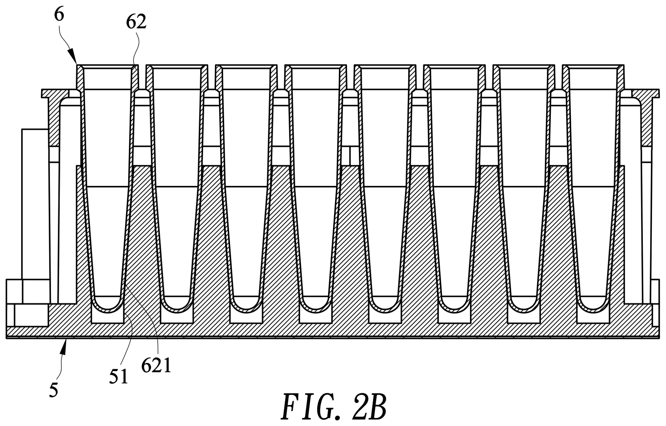

FIG. 2A is a perspective view showing a capillary electrophoresis system with an integrated thermal cycler/thermocycling module in accordance with one embodiment of the present invention. FIG. 2B is a cross-sectional view taken along line A-A of FIG. 2A. The cartridge C is vertically supported with the capillary column 10 depending from an end to access the sample wells 62 of the sample tray 6 supported on the first thermal posts 5 and reagents in reagent wells 45 of a reagent tray 4 carried on a transport mechanism (not shown, e.g., a transport that moves the various trays in two axis X-Z (horizontal and vertical) or X-Y(r)-Z (horizontal plan and vertical) directions by stepper motors). Further references in this regard may be referenced from the patent publications incorporated by reference herein. It is noted that the sample wells 62 of the sample tray 6 correspond to the reservoir 16 shown in the schematic Fig. 1. The reagent tray 4 includes reagent wells 45 for containing, e.g. buffer solutions for access by the cartridge C. In the illustrated embodiment, the reagent tray 4 is provided with two additional smaller reagent wells 45 for additional reagents that may be required for certain CE protocols, e.g., alignment marker (AM) and size marker (SM).

As an example, using the PCR-CE instrument 100, an entire assay for SARS-CoV-2 detection could be completed in 90 minutes due to the rapid low-volume (1-20 µl) thermal cycling and integrated high-speed electrophoretic separation and detection. The detection limit of this system for multiplex amplification of genomic DNA is as low as 10-20 copies in the PCR-CE system. The preferred technique of disposable gel -cartridge is a simple yet very robust design approach for large volume type manufacturing for an easy to operate capillary gel electrophoresis (CGE) instrument that provides significant background noise reduction, which results in improved signal to noise (S/N) for high detection sensitivity of biomolecules (e.g., pathogens) at very low-cost per sample run.

### Gel -Cartridge C

The reusable single-channel pen-shaped gel-cartridge C permits easy plug-and-play use in a robust injection molded body with integrated gel-reservoir design that incorporates micro-fluidic glass capillary column 10 (e.g., 20-100 µm ID) with an effective separation length of 11cm. The shortened capillary length allows for reduced operating voltages (1-15 KV) and the elimination of expensive cooling systems such or recirculating chillers. The design includes top and bottom electrodes (anode & cathode), an exposed detection zone and an imbedded RFID chip/label to provide ID for the gel-cartridge type and track the number of runs per cartridge. Each cartridge contains linear gel-matrix and is capable of analyzing 100-300 samples in as fast as 2 minutes per sample run, consuming as little as 1 pl directly from the PCR sample wells right after the polymerase chain reaction. The pen-shaped cartridge design with narrow bore capillaries facilitates the sample injection from the PCR sample-wells directly accessible from the integrated thermal cycling module, which is an open system that has no lid/door over the sample wells 62 of the sample tray 5 supported on the first thermal posts 5. The amplified PCR product is then directly injected into the gel-filled capillary that includes the fluorescent dye (gel-matrix) for electrophoretic analysis. The reusable/disposable gel-cartridge is a simple yet very robust design approach for large volume type manufacturing for an easy to operate CGE instrument that provides significant background noise reduction, which results in improved S/N for high detection sensitivity of biomolecules at very low-cost per sample run.

The pen-shaped gel-cartridge is integrated with a top buffer/gel reservoir, which is directly coupled to a modular air pressure pump (outside of the instrument). The air pressure pump (or N₂ gas tank) provides the required air pressure to fill-up capillary (micro-fluidic channel) with the separation gel/buffer (dynamic coating of capillary). Depending on the viscosity of the separation gel/buffer; pressures of up to 60 PSI is applied to the glass capillary through the top buffer/gel reservoir. Each cartridge reservoir is equipped with built in electrode (anode), which is automatically connected to the H.V. Power Supply for electrophoresis when installed inside the instrument. The anode is embedded in the gel reservoir to trap the separated DNA fragments from the large pool of the gel preventing re-injection into the capillary column at the purge stage in between the runs. The test samples (covered with mineral oil) are introduced to the separation capillaries (micro-fluidic channel) by electrokinetic injection directly from PCR sample tray. A high voltage power supply is used to deliver 0-20 KV of electrical field to the capillary for the electrokinetic injection and separations of bio-molecules. Excitation LED with broad band light energy (FWHM= 50 nm) and 100 degrees of viewing angle is coupled to large core excite fiber (100-1000 µm) at the flat input end (polished or cleaved end). A line filter (FWHM = 2-50 nm Band Pass line filter) is used in front of the LED before coupling the light into the 300 µm core with 500 µm Ball-ended Excite fiber to reduce background noise. The fluorescence emission signal produced by the separated analytes are then collected at the detection zone of capillary using ball-ended fiber (larger Core fiber with 500 µm Ball) and is relayed down to the Detector Module (using PMT or SiPMT or CCD) with a build in emission filters (Band Pass Filter) for single-color or dual-color type detection.

### Thermal cycling module/Thermal cycler

The PCR-CE system 100 has an integrated thermal cycling module/thermal cycler. For PCR amplification of a DNA/RNA sample, the thermal cycling module is in the form of a thermocycler, which can heat a sample, cool a sample, and/or undertake heating and cooling cycles of the sample. Note that in some embodiments, the thermal cycling module can be used as a stand-alone thermal cycler without being combined with a CE separation system.

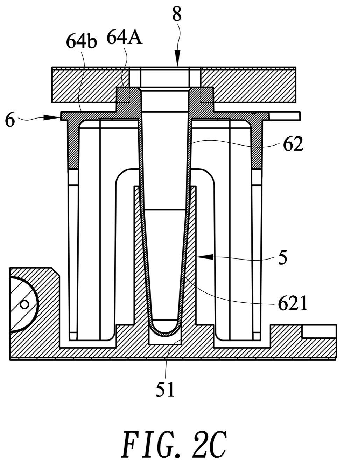

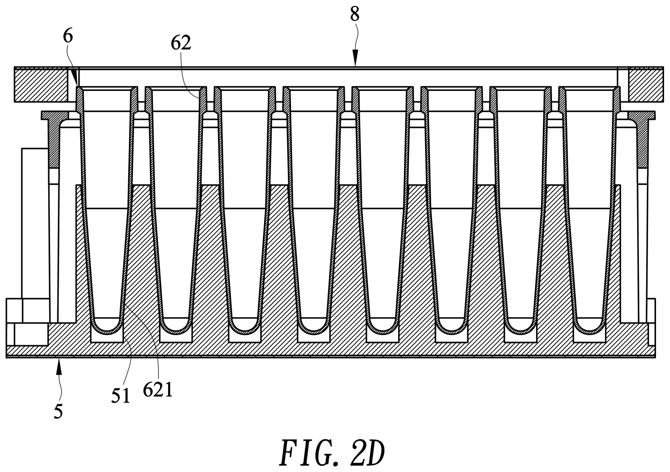

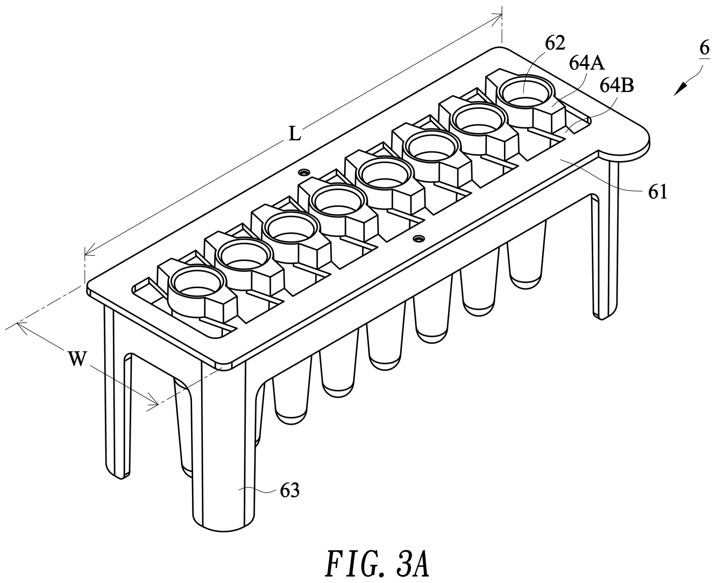

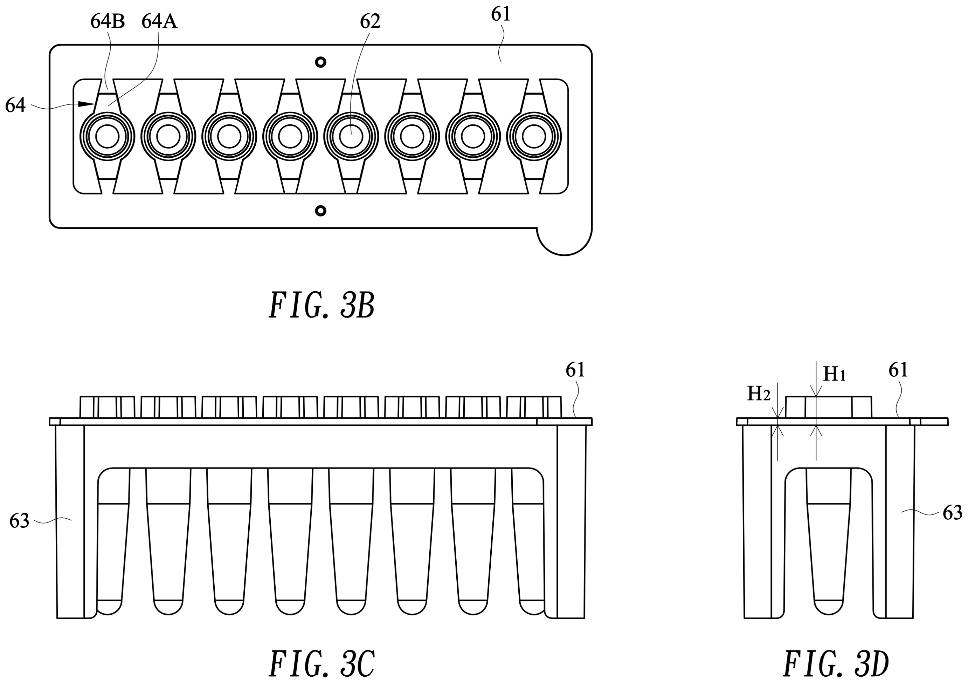

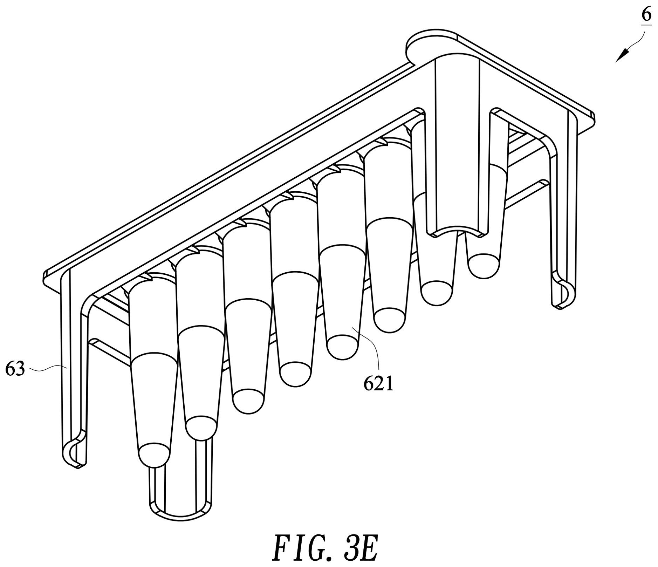

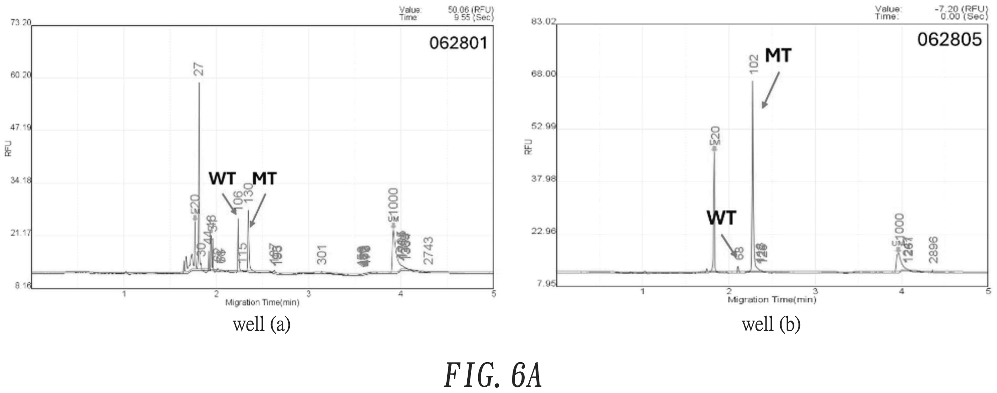

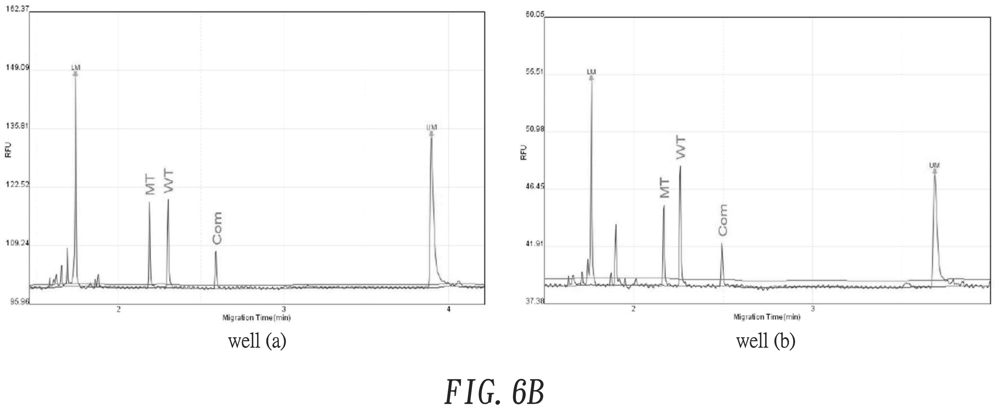

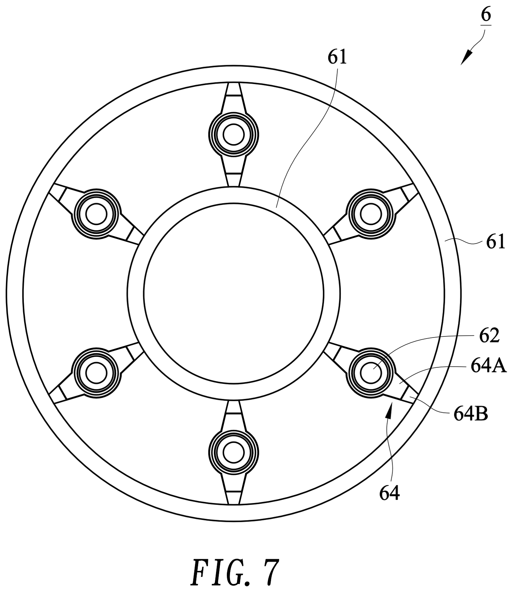

FIGS. 3A to 3E are respectively a perspective view, a top view, a front view, a left side view, and a bottom perspective view of the sample tray 6 in accordance with one embodiment of the present invention. As shown in Figures 3A to 3E, the sample tray 6 is made of a plastic material, e.g., any polymer that can be injection molded with good physical strength, uniformity and smoothness-e.g., polyurethane, polypropylene(PP), PE, PTE, PTFE, Urethane, etc. The integrally formed sample tray 6 includes a frame 61, a plurality of sample well 62, a supporting base 63, and a plurality of floating ribs 64. Each sample well 62 corresponds to two floating ribs 64 and is configured to hold, e.g., 2-100 µl of fluidic sample. In the illustrated embodiment, the number of sample wells 62 is eight, but other numbers are possible. The frame 61 is preferably oblong-shaped or rectangular-shaped and it could be track and field-shaped, ring-shaped, or polygonal-shaped. In case of ring-shaped frame 61, the length direction is defined as the circumferential direction of the ring, and the width direction is defined as the radial direction of the ring. The plurality of sample wells 62 are independent of (disconnected) one another in the length direction L of the rectangular frame 61, and each sample well 62 is connected to the rectangular frame 61 in a width direction W of the rectangular frame 61 through two floating ribs 64 on both sides of the sample well 62. In the preferred embodiment, each floating rib 64 is step-shaped and includes a first rib section 64A and a second rib section 64B that are connected to each other. The first rib section 64A connects the sample well 62 and the second rib section 64B, and the second rib section 64B connects the first rib section 64A and the frame 61. The thickness H1 of the first rib section 64A is greater than the thickness H2 of the second rib section 64B. For example, the thickness H1 is about 1.9 mm and the thickness H2 is about 0.4 mm. FIGS. 2C and 2D are cross-sectional views showing the inventive thermal cycling module/thermal cycler in accordance with one embodiment of the present invention. Referring to FIGS. 2C and 2D, in the illustrated embodiment, an openable lid 8 of the thermal cycler can contact the first rib sections 64A to apply consistent pressure to the top of the sample wells 62. This ensures good contact between the sample wells 62 and the first thermal posts 5 for better heat conduction. The first rib section 64A tapers to the frame 61 along the width direction W (opposite direction to the sample well 62), and the second rib section 64B tapers toward the frame 61 along the width direction W (opposite direction to the sample well 62). In the illustrated embodiment, the supporting base 63 includes four supporting legs, which are respectively located below approximately four corners of the frame 61. Through the supporting base 63, the sample tray 6 can be placed directly on a table without a tube holder. FIG. 7 is a top view of a sample tray 6 according to another embodiment of the present invention. The sample tray 6 described in FIG. 6 is similar to the sample tray 6 described in FIGS. 3A to 3E, except as described below. The difference from the sample tray 6 shown in FIGS. 3A to 3E is that the frame 61 is circular ring-shaped. In the illustrated embodiment, the length direction is defined as the circumferential direction of the ring-shaped frame 61, and the width direction is defined as the radial direction of the circular ring frame 61. The details of the sample tray 6 described in FIG. 6 are the same described in FIGS. 3A to 3E and will not be repeated.

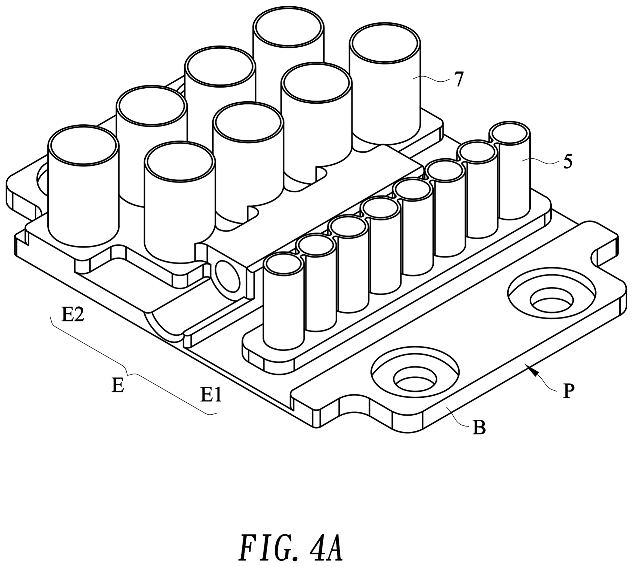

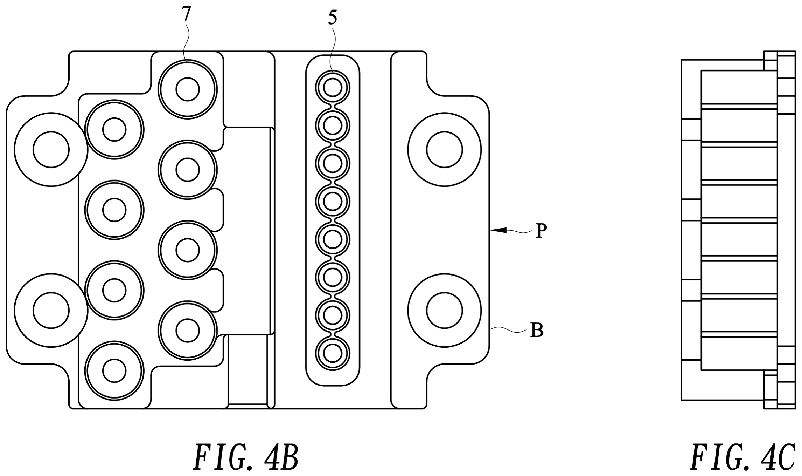

FIGS. 4A to 4C are respectively a perspective view, a top view, and a right side view of a thermal cycling module/thermal cycler in accordance with an embodiment of the present invention. Referring to FIGS. 4A to 4C and FIGS. 2A and 2B, the thermal cycler includes a thermal platform P, a thermoelectric module E below the thermal platform P, and a heatsink (not shown) below the thermoelectric module E. As well known in the art, the thermoelectric module E could operate according to Peltier effect, which creates a temperature difference by transferring heat between two electrical junctions when a voltage is applied across the junctions. The thermoelectric module E thus regulates/controls the temperature of the thermal platform P according to the desired heating/cooling temperature profiles, with heat dissipated at the heatsink.

The thermal platform P has a base B thermal conductively supporting a plurality of first thermal posts 5 and a plurality of second thermal posts 7. The number of the first thermal posts 5 corresponds to the number of the sample wells 62 to receive and thermally conductively support the corresponding sample wells 62, thereby heating or cooling the fluidic sample in the sample wells 62. In the illustrated embodiment as shown in FIG. 2A, one thermoelectric module E regulates/controls the temperature of the first thermal posts 5 and/or the second thermal posts 7 according to the desired heating/cooling temperature profiles. In another embodiment as shown in FIG. 4A, the thermoelectric module E has individually controllable a first thermoelectric module E1 and a second thermoelectric module E2. And the temperatures of the plurality of first thermal posts 5 and the plurality of second thermal posts 7 are separately controlled by the first thermoelectric module E1 and the second thermoelectric module E2. The base B, the plurality of first thermal posts 5, and the plurality of second thermal posts 7 are typically made of a metal (e.g., aluminum) or alloy. The base B, the plurality of first thermal posts 5, and the plurality of second thermal posts 7 may be individual structures thermally conductively coupled together, or may be integrally formed. In the illustrated embodiment, the eight first thermal posts 5 are connected to each other in the length direction L. In another embodiment, the eight first thermal posts 5 are disconnected to each other in the length direction.

The plurality of first thermal posts 5 and second thermal posts 7 may include one or more first temperature sensors (e.g., thermocouples, not shown) to feedback temperature for controlling the temperature profiles of the thermoelectric module E shown in FIG. 2A. Alternatively, the plurality of first thermal posts 5 may include one or more first temperature sensors (e.g., thermocouples, not shown) to feedback temperature for controlling the temperature profiles of the first thermoelectric module E1 shown in FIG. 4A. And the plurality of second thermal posts 7 may include one or more second temperature sensors (e.g., thermocouples, not shown) to feedback temperature for controlling the temperature profiles of the second thermoelectric module E2. The profile of an outer surface 621 of each sample well 62 is tapered, and each first thermal post 5 includes a tapered hole 51 conforming to the profile of the outer surface 621 of the sample well 62. In addition, the disconnected sample wells 62 in the length direction L and the floating ribs 64 allow each sample well 62 to have limited displacement in the vertical direction as well as in the length and width direction. This ensures that each first thermal post 5 is in close contact with the outer surface 621 of the corresponding sample well 62, thereby improving the heat transfer efficiency therebetween.

As illustrated in references TW201623938A and CN118580940A, the sample wells of conventional sample tray (octuple tube/PCR tube) are series connected to each other in the length direction. In practice, it was found that wells of the octuple tube could not to be tightly attached the thermal block. The cumulative tolerance between the wells and the thermal block may be the cause of failure to fit tightly, resulting in a poor PCR amplification efficiency. Even one or more of eight samples cannot be subjected to subsequent CE separation and analysis after PCR amplification. To clarify the problem, same samples were used to perform a same PCR protocol using the inventive sample tray and the traditional octuple tube separately. The experimental results show that PCR samples run with the innovative sample tray have a high yield and the problem of poor heating efficiency due to cumulative tolerance has been overcome.

In the illustrated embodiment, a wall thickness of each sample well 62 of the sample tray 6 is between 0.15 mm and 0.25 mm, preferably 0.2 mm. By contrast, the wall thickness of the sample well of the previously designed sample tray was 0.5 mm. The performance of combination of the sample well-first thermal posts setting has been checked. Experimental results show that by using the inventive sample well-first thermal posts setting, the maximum heating and cooling rate for sample wells can reach 5~5.5°C/sec, which is far better than the 1.8~3°C/sec previously designed. In addition to increasing the thermal conducting rate, the thinner wall thickness allows the sample wells 62 resiliently fit the tapered hole of the corresponding first thermal post 5, thereby improving the thermal efficiency. As shown in FIG. 2A, as the sample wells 62 of the sample tray 6 are respectively inserted into the tapered holes of the first thermal posts 5, the supporting base 63 abuts an upper surface of the base B.

### Heating /Cooling Performance Check

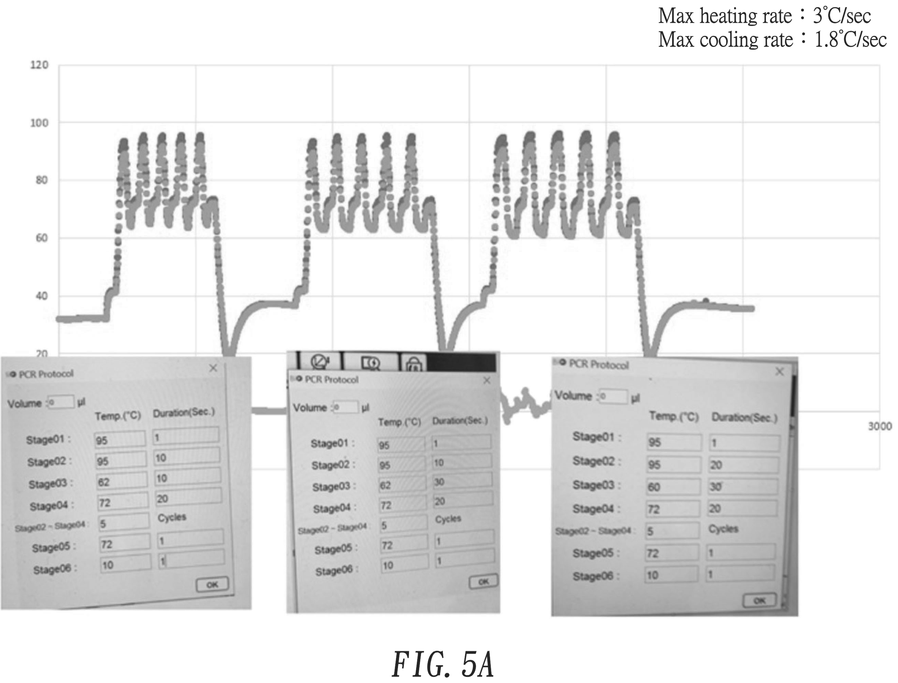

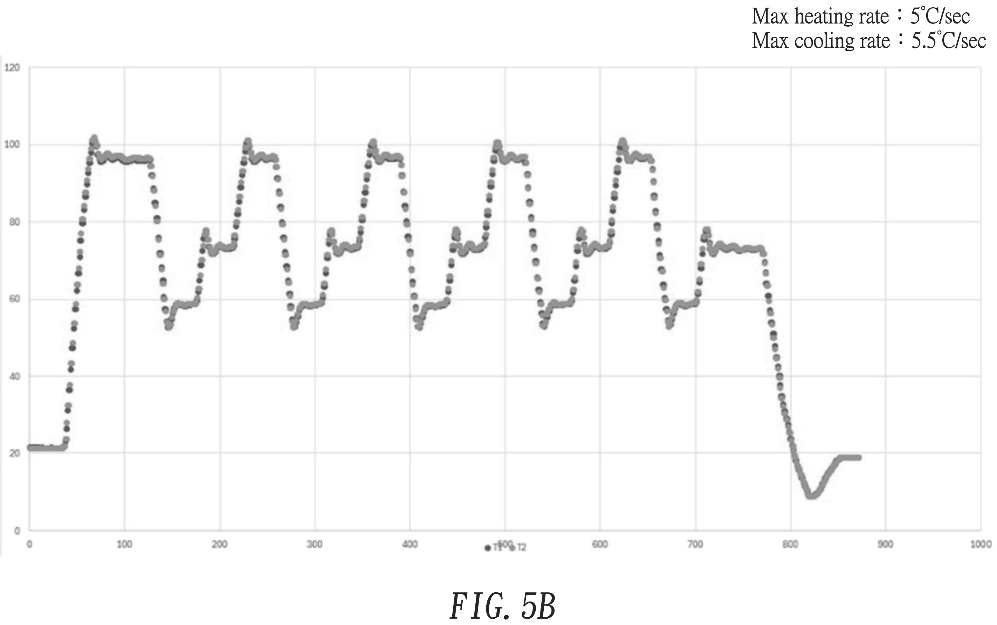

In this test, a datalogger and two K-type thermocouples were used to check the heating and cooling rates and uniformity of the inventive sample tray 6 and first heating posts 5 combination and the traditional octuple tube (PCR tube) and heating block combination. FIG. 5A shows a heating/cooling curve of a well of conventional octuple tube, and FIG. 5B shows a heating/cooling curve of a sample well of the inventive sample well. As shown in FIGS. 5A and 5B, the well of conventional octuple tube has a maximum heating rate of 3°C/s and a maximum cooling rate of 1.8°C/s; by contrast, the sample well of the present invention has a maximum heating rate of 5°C/s and a maximum cooling rate of 5.5°C/s. In addition, the sample well with floating rib design reveals better temperature uniformity compared with that of the conventional octuple tube.

### PCR Testing

ALDH2 (Aldehyde dehydrogenase) gene testing kit was been introduced in this test. ALDH2 is located on chromosome 12 and is responsible for the oxidation of acetaldehyde. The single nucleotide polymorphism (SNP) of the ALDH2 gene is a G-to-A substitution resulting in the ALDH2 Glu504Lys allele, thus there are three different genotypes: G/G homozygote (wild type, WT), G/A heterozygote (hetero type), and A/A homozygote (mutant type, MT). The G-to-A mutation will cause the protein structural change leading to reduced acetaldehyde metabolism as well as alcohol tolerance. And the SNP of the ALDH2 gene occurs with an incidence of 35-57% in different East Asia. There is why people get alcohol flush reactions more commonly in Asians.

A same sample is subjected to multiplex polymerase chain reaction (multiplex PCR) by respectively using the inventive sample tray 6 and first heating posts 5 combination and the traditional octuple tube and heating block combination. FIG. 6A is a graph showing the relationship between the migration time and the relative fluorescence unit (RFU) of two tubes (wells) of conventional octuple tube, and FIG. 6B is a graph showing the relationship between the migration time and the relative fluorescence unit (RFU) of two sample wells 62 in the sample tray 6 of the present invention. In this test, the ratio of mutant (MT) peak to wild-type (WT) peak should be less than 1:5. As shown in FIG.6A, after the samples in two tubes (wells) in the conventional octuple tube were subjected to multiplex PCR reaction, the MT/WT ratio of one tube exceeded the above ratio. As shown in FIG. 6A, after the multiple PCR reaction, the MT/WT ratio of both two sample wells 62 are both smaller than 1:5. The results show that the combination of the first thermal post 5 and the sample tray 6 exhibits excellent thermal uniformity and improves heating efficiency by elininating the cumulative tolerance.

As shown in Figures 2A, 2B and 4A to 4C, in the illustrated embodiment, the second thermal posts 7 are configured for pretreatment of the sample. Each second thermal post 7 includes a tapered cavity for receiving a sample tube 71 with a tapered bottom to heat or cool a sample therein. In the illustrated embodiment, a function of the sample tube is to inactivate an enzyme such as Proteinase K. The pretreated samples are then transferred to the sample wells 62 in the sample tray 6 for PCR amplification.

In another alternative embodiment, both the plurality of first thermal posts 5 and the plurality of second thermal posts 7 are used to perform PCR thermal cycling, and up to 16 PCR products could be automatically analyzed using a transport mechanism.

It is noted that the inventive thermal cycling module/thermal cycler is an open system with no lid required. The samples in the sample wells 62 of the sample tray 6 are covered with a thin layer of mineral oil to prevent evaporation and heat loss. There is no need to provide a separate cover or lid over the sample well 62 with the use of mineral oil. With such open system, one can perform CE at lower number of PCR cycles, thereby reducing the overall operating time.

It is noted that the thermal cycling module described above, including the sample tray 6 therein, could be used for other temperature-sensitive reactions besides polymerase chain reaction (PCR), such as but not limited to restriction enzyme digestion or rapid diagnostic tests.

From the foregoing, it will be appreciated that specific embodiments of the invention have been described herein for purposes of illustration, but that various modifications may be made without deviating from the scope of the invention. Accordingly, the invention is not limited except as by the appended claims.

Although the technology has been described in language that is specific to certain structures and materials, it is to be understood that the invention defined in the appended claims is not necessarily limited to the specific structures and materials described. Rather, the specific aspects are described as forms of implementing the claimed invention. Because many embodiments of the invention can be practiced without departing from the spirit and scope of the invention, the invention resides in the claims hereinafter appended.

## Claims

1. A sample tray for temperature-sensitive reactions, comprising:
a plurality of sample wells;
a frame;
a plurality of floating ribs, wherein each of the plurality of sample wells corresponds to two of the plurality of floating ribs;
wherein the plurality of sample wells are disconnected one another in a length direction of the frame, and each of the plurality of sample wells is connected to the frame in a width direction of the frame through the corresponding two of the plurality of floating ribs on both sides of the sample well.

2. The sample tray according to claim 1, wherein each of the plurality of floating ribs is step-shaped and comprises a first rib section and a second rib section that are connected to each other, and wherein the first rib section connects the corresponding sample well and the second rib section, the second rib section connects the first rib section and the frame, and a thickness of the first rib section is greater than a thickness of the second rib section.

3. The sample tray according to claim 2, wherein the first rib section tapers to the frame along the width direction.

4. The sample tray according to claim 2, wherein the second rib section tapers to the frame along the width direction.

5. The sample tray according to claim 2, wherein the two stepped-shaped floating ribs allow a displacement of the corresponding sample well in a vertical direction as well as in the length direction and in the width direction.

6. The sample tray according to claim 1, wherein a wall thickness of each of the plurality of sample wells is between 0.15 mm and 0.25 mm.

7. The sample tray according to claim 1, wherein a heating or cooling rate of the plurality of sample wells is equal to or greater than 5°C/sec.

8. The sample tray according to claim 1, further comprising a supporting base connected to the frame and supporting the frame.

9. The sample tray according to claim 1, wherein the sample tray is integrally formed.

10. The sample tray according to claim 1, wherein the sample tray is rectangular-shaped.

11. The sample tray according to claim 1, wherein the frame is ring-shaped, and wherein the length direction is a circumference direction of the frame, and the width direction is a radial direction of the frame.

## Amended claims

### Amended claims in accordance with Rule 137(2) EPC.

1. A sample tray (6) for temperature-sensitive reactions, comprising:
a plurality of sample wells (62);
a frame (61); and
a plurality of floating ribs (64), wherein each of the plurality of sample wells corresponds to two of the plurality of floating ribs;
wherein the plurality of sample wells are disconnected from one another in a length direction of the frame, and each of the plurality of sample wells is connected to the frame in a width direction of the frame through the corresponding two floating ribs arranged on opposite sides of the sample well;
wherein the corresponding two floating ribs each comprise a reduced thickness portion and are configured to allow displacement of the corresponding sample well in a vertical direction as well as in the length direction and in the width direction relative to the frame;
wherein the sample tray is integrally formed.

2. The sample tray according to claim 1, wherein each of the plurality of floating ribs is step-shaped and comprises a first rib section (64A) and a second rib section (64B) that are connected to each other, and wherein the first rib section connects the corresponding sample well and the second rib section, the second rib section connects the first rib section and the frame, and a thickness of the first rib section is greater than a thickness of the second rib section.

3. The sample tray according to claim 2, wherein the first rib section tapers to the frame along the width direction.

4. The sample tray according to claim 2, wherein the second rib section tapers to the frame along the width direction.

5. The sample tray according to claim 1, wherein a wall thickness of each of the plurality of sample wells is between 0.15 mm and 0.25 mm.

6. The sample tray according to claim 1, further comprising a supporting base connected to the frame and supporting the frame.

7. The sample tray according to claim 1, wherein the sample tray is rectangular-shaped.

8. The sample tray according to claim 1, wherein the frame is ring-shaped, and wherein the length direction is a circumference direction of the frame, and the width direction is a radial direction of the frame.
